# EUROPEAN PATENT SPECIFICATION

(11) **EP 4 417 050 B1**
(45) Date of publication and mention of the grant of the patent: **03.12.2025**
(21) Application number: 24156451.7
(22) Date of filing: 07.02.2024
(51) Int. Cl.: A01M 21/02, A01B 39/18, A01B 39/08

(54) **A WEEDING DEVICE AND A METHOD FOR REMOVING WEEDS**
UNKRAUTBEKÄMPFUNGSVORRICHTUNG UND VERFAHREN ZUR ENTFERNUNG VON UNKRAUT
DISPOSITIF DE DÉSHERBAGE ET PROCÉDÉ D'ÉLIMINATION DE MAUVAISES HERBES

(30) Priority: 13.02.2023 PL 44376123
(43) Date of publication of application: 21.08.2024
(73) Proprietor: Agrobots Sp. z o.o., 10-686 Olsztyn (PL)
(72) Inventor: CIESLAK, Janusz, 95-010 Dobra (PL); NIEDBALKA, Kamil, 92-321 Lodz (PL); MODZELEWSKI, Kamil, 05-311 Debe Wielkie (PL)
(74) Representative: Kancelaria Eupatent.pl Sp. z o.o.

(56) References cited:
- WO-A1-2021/016444
- WO-A1-2022/224159
- CN-A- 103 141 172
- CN-B- 101 990 796
- CN-U- 218 184 067

## Description

### TECHNICAL FIELD

The invention relates to the field of agricultural machinery, and more particularly to devices and methods for the removing weeds.

### BACKGROUND

The cultivation of row crops, such as potatoes and other vegetables, necessitates the use of agricultural tools for the elimination of weeds, particularly in the spaces between the rows of crops. These tools, commonly referred to as weeders, are typically configured to be operatively associated with an agricultural tractor and may include a series of weeding knives mounted on a bar transverse to the direction of tractor movement.

A persistent challenge in the design and operation of weeding devices is the achievement of efficient weed removal over a broad area without inflicting damage to the crops. In pursuit of this objective, various technological advancements have been made, which are reflected in the existing body of patent literature.

For instance, certain innovations have focused on the use of image processing techniques to discern the presence of weeds and crops, thereby delineating the areas requiring weeding. An example of such system is known from a US patent application US2018330166A1, which employs a neural network-based module for plant detection. This solution has been integrated into agricultural equipment to facilitate targeted application of treatments to plants, but not to removal of weeds.

Another approach is disclosed in a PCT application WO2019083336A1, which utilises a neural network-based module to differentiate between crops and weeds using image data. This system is capable of identifying crop rows and distinguishing crops from weeds within those rows. While this technology could have potential applications in conjunction with weeders, the document does not detail the construction of weeders that could incorporate such a module.

Automated weeders are also known in the art, capable of weeding within specified areas. A weeder described in a Japanese patent application JPH09137A, for example, is designed to selectively remove individual plants.

Further, a Polish patent application PL239730 discloses a weeding device comprising a support frame with a hitch for attachment to a self-propelled vehicle, a vision camera coupled to a computer for autonomous weed and crop recognition, and at least one weeding unit with mechanical weed removal tools. The weeding unit includes working arms with undercutting blades, driven by a geared motor to convert rotary motion into a swinging motion. However, this design presents a compromise between operational speed and weeding precision, as the swinging arms must avoid the crops, necessitating either a reduction in tractor speed or an increase in the unweeded area around the crops. Moreover, such mechanical arms are susceptible to damage from soil obstacles, such as large stones, necessitating the use of a torque gauge rigidly connected to the gearmotor to monitor mechanical resistance levels. Further weeding devices of this kind are known from PCT applications WO2022224159A1 and WO2021016444A1 or Chinese utility model CN218184067U.

### SUMMARY

In light of the foregoing, there is a need to develop improvements in weed removal equipment with the aim of increasing weeding accuracy while maintaining the highest possible operating speed.

In one aspect, the invention relates to a weeding device designed for coupling with an agricultural tractor to navigate along rows of crops. The device includes a main body for attachment to the tractor and at least one weeding module featuring weeding tools. These tools are connected to the main body and are controlled by a controller based on image data from a camera. The weeding module comprises two tools, with one being a knife mounted on a rotary mandrel and having arms with notches between them. The controller is uniquely configured to adjust the knife between a weed-removing configuration and a plant-bypassing configuration, where the distance between the knife's arm closest to a second tool and the second tool is greater in the plant-bypassing configuration than a corresponding distance in the weed-removing configuration. This aspect of the invention provides the technical advantage of enabling precise weeding while minimizing damage to crops by adjusting the tool configuration according to the presence of plants.

A preferred embodiment relates to the inclusion of a second tool in the weeding module that is a knife mounted on a second rotary mandrel. This configuration provides the technical advantage of a symmetrical and dynamic weeding action around the crops, enhancing the precision of weed removal.

Alternatively, the second tool of the weeding module can be a passive knife mounted on a stationary holder. This setup offers the technical advantage of a simplified mechanical design while still maintaining effective weeding capabilities.

The knife can be a flat disc with at least two arms, with the ends located on the circumference of a circle that defines the disc's outer diameter, and arched notches between the arms. This design provides the technical advantage of increased structural rigidity and the ability to navigate around the plants with minimal disruption to the crops.

An additional preferred embodiment relates to the controller comprising a plant recognition module implemented as an artificial intelligence module configured to recognize areas occupied by crops in the image data from the camera. The technical advantage here is the enhanced accuracy in distinguishing crops from weeds, leading to more precise weeding without damaging the crops.

Another preferred embodiment features a marker positioned within the field of view of the camera at a known distance from the camera for image data scaling. This provides the technical advantage of precise image scaling, which is critical for accurate plant recognition and weeding tool positioning.

A further preferred embodiment involves at least one weeding module being mounted on a beam equipped with a lateral displacement module comprising an actuator configured to adjust the lateral position of the weeding module relative to the weeding direction. The technical advantage of this feature is the ability to maintain precise alignment with the crop rows, thereby optimizing the weeding process.

An additional preferred embodiment is where the tools are mounted on pivoting arms interconnected and associated with a spring configured to pivot the arms away from each other when a tool attached to one of the arms encounters an obstacle. This configuration provides the technical advantage of allowing the weeding device to adapt to unexpected obstacles, reducing the risk of tool damage and downtime.

The invention is also directed to a method for removing weeds using the weeding device as described herein. The method comprises positioning the weeding modules such that the tools are inserted into the soil symmetrically relative to a course line of a crop row, with one tool on each side of the line; detecting that the tools approach the plant; initiating a rotation of at least one of the tools around its axis such that during a rotational translatory motion of the tool relative to the plant, the plant is located in the notch between the arms of the tool in a plant-bypassing configuration and next, moving the tools to the weed-removing configuration.

The method may further comprise performing at least one transition of at least one tool from the weed-removing configuration to the plant-bypassing configuration before the tools approach the plant. This allows for rapid rotation around the plant and minimizes the weeding exclusion zone near the plant root.

### BRIEF DESCRIPTION OF DRAWINGS

The subject of the invention is illustrated in an example of execution in the drawings, in which:
FIG. 1 provides an overview of a weeding device being pulled by an agricultural tractor along crop rows;
FIGS. 2A, 2B, and 2C display the weeding device in oblique front, oblique rear, and side views, respectively;

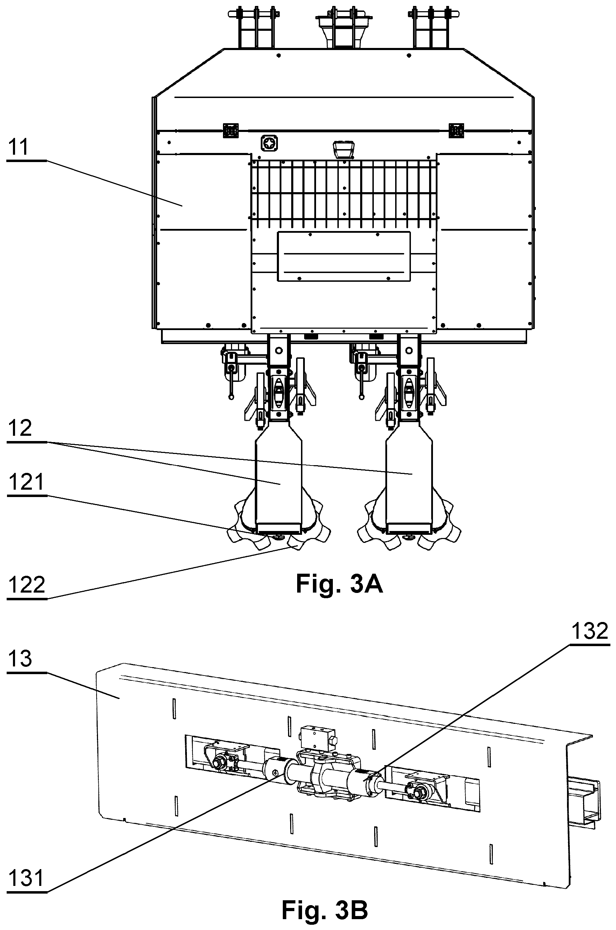

FIG. 3A schematically illustrates the operating principle of the side-shift mechanism,
and FIG. 3B shows the actuator arrangement of the side-shift mechanism;
FIGS. 4A, 4B, 4C depict the weeding blades in operation near the crop;
FIG. 5 provides a schematic representation of the weeding area around the crop;
FIGS. 6A-6D present examples of blade shapes;
FIGS. 7A-7C illustrate an example of a hybrid configuration of weeding tools;
FIG. 8 displays the tool displacement arrangement;
FIG. 9 provides a functional diagram of the weeding device;
FIG. 10 shows an example of a camera image with the positions of detected plants marked.

### DETAILED DESCRIPTION

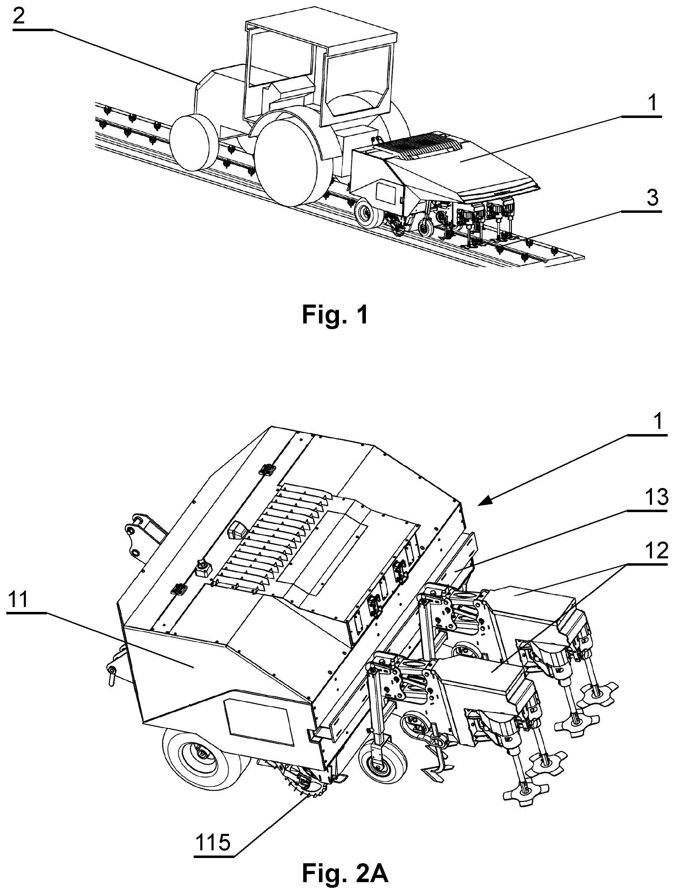

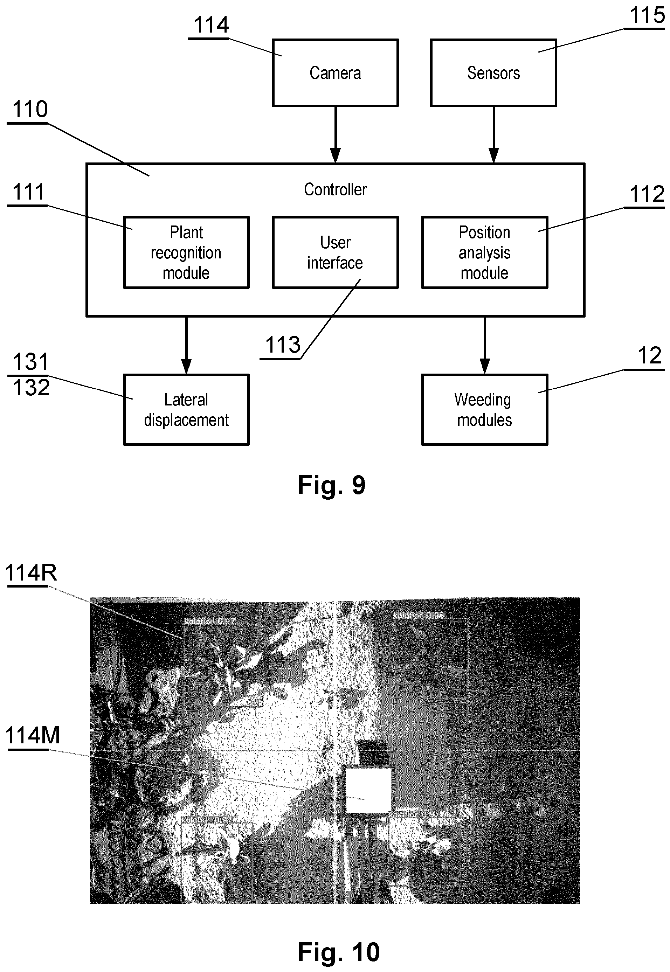

The present invention is directed to a weeding device 1, as illustrated in FIG. 1, and further detailed in the functional diagram of FIG. 9. The weeding device 1 is configured for coupling to an agricultural tractor 2 and is operable along rows 3 of crops. The weeding device 1 may be connected to the tractor 2 via a conventional three-point linkage and may include a power transmission shaft for operation.

The weeding device 1 includes a main body 11, which serves as a structural foundation for at least one weeding module 12. In the embodiment depicted, two weeding modules 12 are shown, although it is contemplated that additional modules may be employed. The main body 11 accommodates various components that facilitate the functionality of the weeding module 12, such as electrical instruments (e.g., batteries, power generator, disconnects, fuses, contactors, voltage converters), hydraulic instruments (e.g., oil tank, pump, valves, pressure sensors), measurement devices (e.g., unit displacement sensor, height above ground sensor, ground illuminators, camera), and control elements (e.g., unit operation controller). A tool bar 13 is provided at the rear of the main body 11, to which the weeding modules 12 are affixed, preferably via a lateral displacement system.

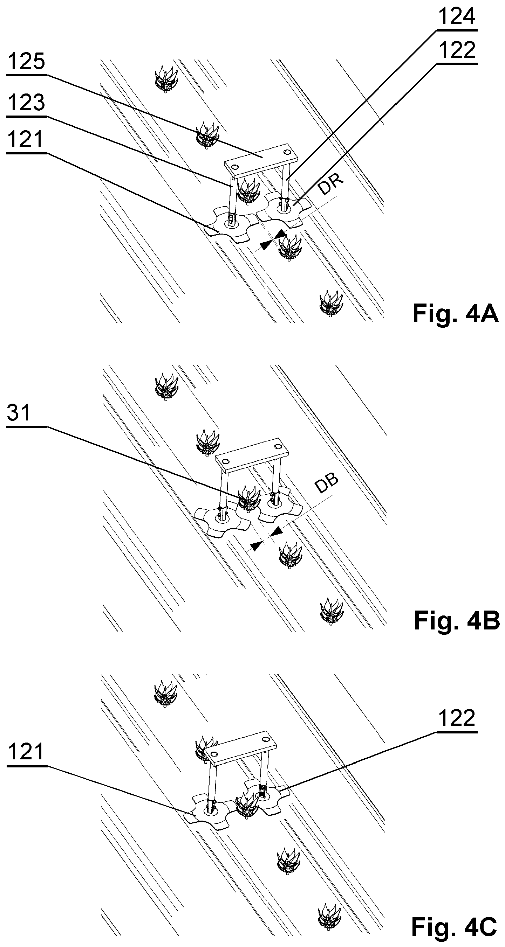

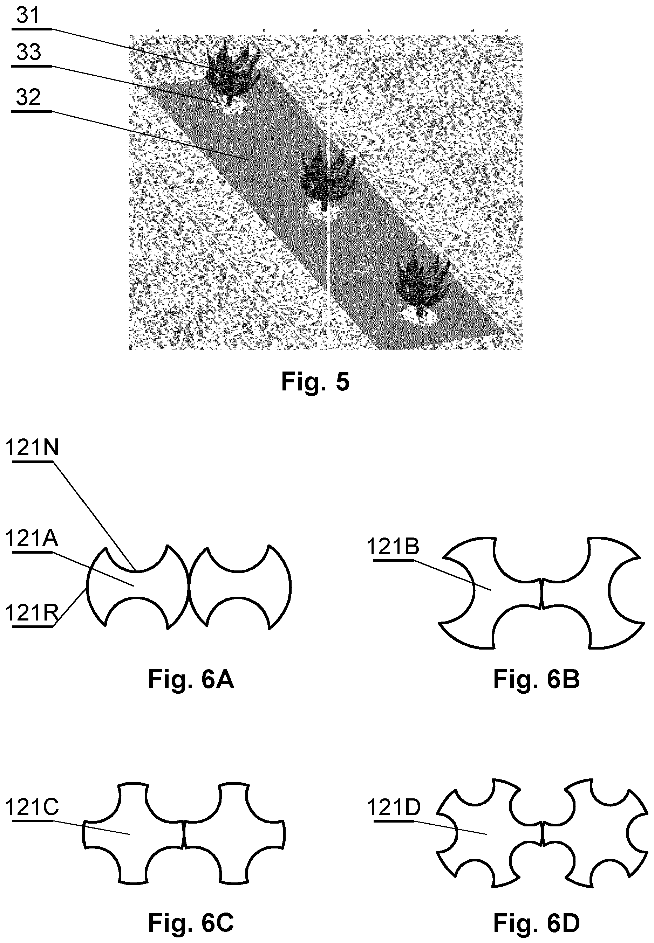

As depicted in FIG. 1, each weeding module 12 comprises a pair of knives 121, 122, which are mounted on respective rotary mandrels 123, 124 affixed to a support beam 125. The knives 121, 122 are preferably configured as flat discs with a plurality of radial arms 121R, terminating at the periphery of a circle that defines the disc's outer diameter. Arched cutouts 121N are formed between the arms 121R. The disc surfaces may be reinforced with embossing to enhance structural rigidity. Various designs of the knives, suitable to be used in pairs, are illustrated in FIGS. 6A-6D, showcasing two-armed 121A, three-armed 121B, four-armed 121C, and five-armed 121D designs. The operational configuration of the discs can be adjusted between a weed-removing configuration and a plant-bypassing configuration. In the weed-removing configuration, as shown in FIGS. 4A, 4C, and 6A-6D, the arms 121R of the knives 121, 122 are positioned in close proximity (in a distance DR), preferably in contact. Conversely, in the plant-bypassing configuration, as illustrated in FIG. 4B, the arms 121R of the knives 121, 122 are spaced apart maximally (in a distance DB), forming a gap between them, with the central region of the plant 31 situated between adjacent notches 121N.

During operation, the weeding modules 12 are adjusted such that the knife pairs 121, 122 are inserted into the soil at an effective depth for weed removal, which may vary based on the weed species present, typically ranging from 1 to 10 cm. The knives 121, 122 are symmetrically positioned relative to the trajectory of a given crop row 3, ensuring that one knife is situated on one side of the row and the other knife on the opposite side. When the knives 121, 122 traverse the inter-plant spaces within a row, they maintain a stationary position in the weed-removing configuration, as depicted in FIG. 4A. As the knives 121, 122 near a plant 31, they commence rotation about the mandrels 123, 124 in opposing directions (e.g., when viewed from above, the left knife 121 may rotate in a clockwise direction and the right knife 122 in an anticlockwise direction). The rotation parameters are selected to ensure that during their rotational translatory motion relative to the plant 31, the plant-particularly its central point, typically where the root is located-is positioned within the space of the notch 121N between the arms 121R of the knives, as shown in FIG. 4B. The knives then continue to rotate until they revert to the weed-removing configuration, as seen in FIG. 4C, whereupon they halt and proceed until encountering the subsequent plant 31. Consequently, the weeding module 12 effectively removes weeds from the delineated area 32 shown in FIG. 5, sparing only a minimal section 33 surrounding each plant 31.

To optimize the device's movement speed along the crop rows 3, the initiation of motion of the knives 121, 122 may occur at a considerable distance from the plant 31. This ensures that prior to the actual rotation where the arms 121R of the knives 121, 122 circumvent the plant 31, the knives 121, 122 perform at least one transition between the weed-removing configuration and the plant-bypassing configuration (i.e., for two-armed knives - half a full turn, for three-armed knives - one-third of a full turn, for four-armed knives - one-quarter of a turn, etc.). This initial rotation phase, which involves the knives gaining momentum and reaching the desired rotation speed, may be lengthier than subsequent phases when the knives have attained the target speed, due to the initial resistance from the soil. This can result in the first plant-bypassing area being slightly elongated in the direction of the device's movement compared to the intended shape at the target rotation speed of the knives. However, since this initial phase occurs before the knives approach the plant, by the time they reach the plant, they have already achieved the target rotational speed, allowing for rapid rotation around the plant and minimizing the weeding exclusion zone near the plant root.

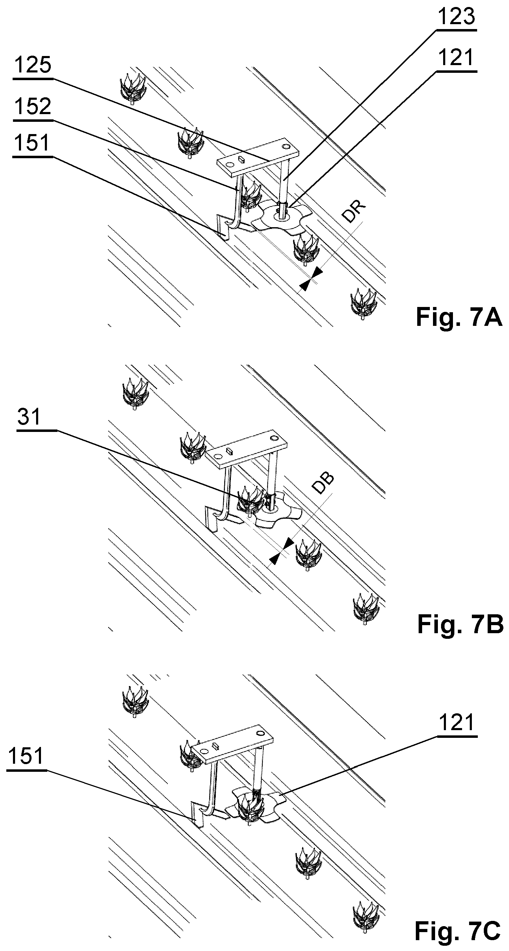

In an alternative embodiment, the weeding module 12 may be equipped with a single rotary knife 121, which is coupled to a rotary mandrel 123 affixed to a support beam 125, and a stationary knife 151, which is mounted on a fixed holder 152. This configuration, depicted in FIGS. 7A-7C, is herein referred to as a hybrid configuration. The stationary knife 151 may be configured in a V-shape with its apex oriented in the direction of weeding. The rotary knife 121 may possess a slightly larger diameter than the rotary knives utilised in the dual-knife setup, or it may feature enlarged cutouts to facilitate the circumvention of the plant. During operation, the single rotary knife 121 can assume either a weed-removing configuration or a plant-bypassing configuration, analogous to the dual-knife arrangement. Asymmetrical positioning of the hybrid unit with respect to the crop row is also permissible. Additional designs of tools within the weeding module, such as those comprising three or more tools, are also envisaged.

The operation of the weeding device 1 is supervised by a controller 110, which can be a single electronic module or a system of interconnected modules, wherein the one or modules may have a form of a microcontroller and/or a computer with a processor and memory. The controller 110 handles the functionality of specific modules (which can be realized as hardware or software modules), such as a plant recognition module 111, a position analysis module 112 and a user interface 113, the details of which will be explained below.

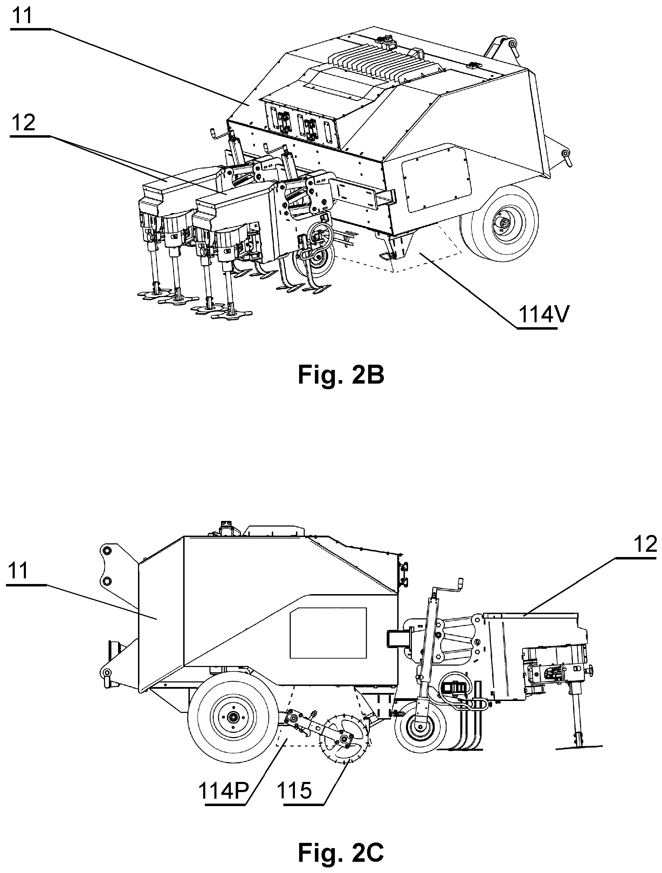

The identification of the crop row 3 and the individual crops 31 is accomplished by a plant recognition module 111. The plant recognition module 111 is configured to analyse image data captured by a camera 114, which is positioned on the weeding device ahead of the weeding modules 12. As the weeding device progresses, the camera 114 captures images at a predetermined frequency, which is ideally selected to ensure that each image partially overlaps with the preceding image, or more preferably, that at least half of each image coincides with a part of the preceding image. This overlapping of images aids in correlating successive images. The camera's field of view 114V, delineated by the dashed lines in FIGS. 2B and 2C, encompasses at least one crop row 3. A wide-angle camera 114 may be employed, capable of capturing two or more rows of crops 3. The number of cameras 114 utilised on the weeding device should be sufficient to cover the operational area of all weeding modules 12.

Preferably, the plant recognition module 111 is an artificial intelligence module, such as a suitably trained neural network, which is adept at discerning the regions occupied by crops 31 within the image data. The plant recognition module 111 may be specialised for a specific crop type, such as potatoes or cabbages, or it may be a versatile module that can be configured prior to operation to recognise the specific crop type to be weeded. For instance, the plant recognition module 111 may be calibrated to identify the area occupied by the plant 31 (e.g., by the leaves visible in the image from the camera 114) and to ascertain the geometric centre of the plant 31 (or another relevant point based on the plant species, such as the point with the highest concentration of plant material). This enables the cutting knives 121, 122 to circumnavigate the determined geometric centre, where the plant's root or other critical plant parts are likely to be situated, which should be avoided by the arms 121R of the knives 121, 122. FIG. 10 illustrates an example of the output from the plant recognition module 111 superimposed on the camera's image within its field of view 114V, with rectangles 114R indicating detected plant locations.

To facilitate precise scaling of the image data, a marker 114M of known dimensions and location relative to the camera may be placed within the camera's field of view 114V. Alternatively, a sensor to measure the distance from the camera to the ground, such as a radar or ultrasonic sensor, may be incorporated into the weeding device. The positioning of the crop row 3 and the plants 31 can be determined by drawing a line through two consecutively recognised plants in the direction of the weeding device's movement, or by establishing a line that best fits three or more recognised plants 31 along the direction of the weeding device's movement. Consequently, the plant recognition module 111 is configured to provide information regarding the locations of the plants 31 and the lines of the plant rows 3 within the image. Other variations of the plant recognition module 111, such as an artificial intelligence module for identifying weed-occupied areas, algorithmic modules for plant area recognition, algorithmic modules for weed area recognition, or external modules of the "black box" type with undisclosed operational methods but known outcomes in terms of areas requiring weeding, are also contemplated. The computational algorithms may be executed by a computing chip installed on the weeding device or by external computing resources, such as those available in cloud computing, based on images transmitted from the camera.

The position analysis module 112 utilises data on the positions of the plants 31 and the lines of the plant rows 3, the known location of the marker 114M (which can serve as a reference for additional measurements), and data on the weeding device's movement speed (provided, for example, by a measuring wheel among the sensors 115) to calculate the required positioning of the weeding modules 12 and the timing for initiating the rotation of the knives 121, 122. Additional sensors 115 that may be installed on the weeding device for controlling or fine-tuning the operation of its components include position sensors for the lateral displacement modules 131, 132, soil height sensors, and oil pressure sensors.

The operation of the weeding device is overseen by the user via a user interface 113, which enables the input of parameters into the controller, such as the crop type and its growth stage; for instance, differentiating between three growth stages. The interface allows for the application of various filters, including a confidence threshold for detection and the number of samples to be considered. Additionally, the user may input the number of crop rows and the anticipated spacing between plants. The interface is designed to facilitate manual control and includes advanced menus for users with more experience or for service technicians.

Preferably, the weeding modules 12 are mounted on a beam 13 that is equipped with a lateral displacement system incorporating dedicated actuators 131, 132 for each weeding module 12. The actuators are preferably arranged in pairs, with both control and power (hydraulic) connections supplied to the actuators. Each actuator 131, 132 is configured to adjust the position of the weeding module 12 it supports so that the module aligns with the crop row 3 as identified by the plant recognition module 111. For instance, each actuator 131, 132 may enable lateral adjustment of the respective weeding module by +/- 100mm from the central position along the beam 13. This feature allows the weeding modules 12 to precisely follow the crop row 3 without necessitating adjustments to the tractor's course, provided the deviation of the row's position remains within the operational range of the actuators 131, 132. Depending on the requirements and desired performance of the device, multiple weeding modules can be mounted on a single beam. The weeding device may also include dedicated lateral shifting modules for each headland accommodating a specific number of rows.

The weeding device is designed to allow for height adjustment to adapt the weeding depth to the crop conditions.

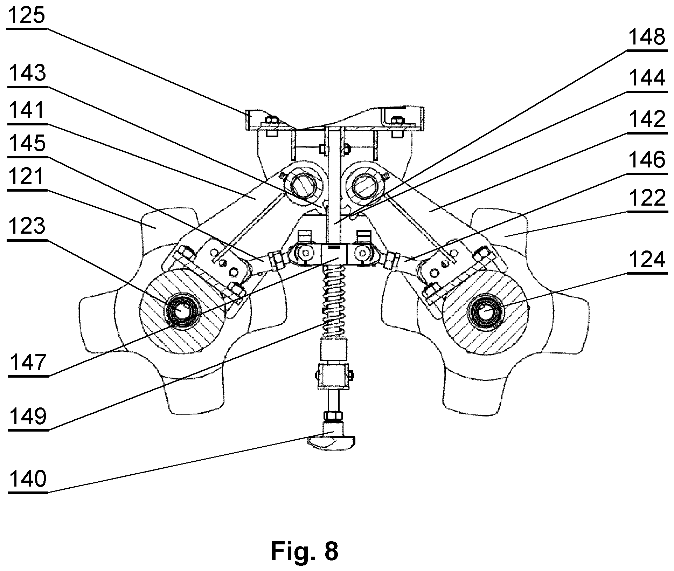

Moreover, the weeding device may incorporate an automatic extension mechanism for the weeding tools upon encountering an obstacle, as depicted in Fig. 8. This feature is particularly advantageous for designs with two rotary knives. For example, should a foreign object such as a stalk or stone become lodged between a pair of tools, the tools pivot laterally to allow the object to pass without disrupting the operation, and then return to their standard position after a short period, facilitated by a system of springs, joints, and linkages. In this configuration, the rotary mandrels123, 124 to which the knives 121, 122 are affixed are connected to the support beam 125 via pivoting arms 141, 142. The arms 141, 142 are interconnected, preferably by gears 143, 144, so that the pivoting of one arm 141, 142 induces a corresponding movement in the other arm 142, 141. At the ends of the arms where the mandrels 123, 124 are mounted, there are rods 145, 146 which are connected to a central element 147 sliding on a guide 148, which is biased by a spring 149. The mechanism operates such that if one of the tools 121, 122 encounters an obstacle, it deflects from the weeding device's movement axis until the obstacle is bypassed, simultaneously causing the other tool to deflect and compress the spring 149 (to the position shown in Fig. 8). Once the obstacle has been bypassed, assuming it is within the deflection range of the tool, the spring 149 expands and returns the tools 121, 122 to their initial position where they are in close proximity (as in Fig. 2A, for example). The initial tension of the spring 149 can be adjusted using a knob 140.

## Claims

1. A weeding device (1) for use with an agricultural tractor to be guided along rows of crops, the weeding device (1) comprising:
- a main body (11) configured for attachment to the tractor;
- at least one weeding module (12) with weeding tools, connected to the main body (11) and controlled by means of a controller (110) based on image data from a camera (114); **characterized in that**
- the weeding module (12) comprises two tools, of which the first one is a knife (121) mounted on a rotary mandrel (123) and having arms (121R) with notches (121N) therebetween;
- wherein the controller (110) is configured to adjust the configuration of the knife (121) between a weed-removing configuration and a plant-bypassing configuration; and
- wherein in the plant-bypassing configuration a distance (DB) between the knife's (121) arm (121R) that is closest to a second tool (122, 151) and said second tool (122, 151) is greater than a corresponding distance (DR) in the weed-removing configuration.

2. The weeding device according to claim 1, wherein the second tool of the weeding module (12) is a knife (122) mounted on a second rotary mandrel (124).

3. The weeding device according to claim 1, wherein the second tool of the weeding module (12) is a passive knife (151) mounted on a stationary holder (152).

4. The weeding device according to any preceding claim, wherein the knife (121, 122) which is mounted on the rotary mandrel (123, 124) is a flat disc with at least two arms (121R), the ends of which are located on the circumference of a circle defining the outer diameter of the disc, and wherein arched notches (121N) are present between the arms (121R).

5. The weeding device according to any preceding claim, wherein the controller (110) comprises a plant recognition module (111) implemented as an artificial intelligence module configured to recognize areas occupied by crops (31) in the image data from the camera (114).

6. The weeding device according to any preceding claim, further comprising a marker (114M) positioned within the field of view of the camera (114) at a known distance from the camera (114) for image data scaling.

7. The weeding device according to any preceding claim, wherein at least one weeding module (12) is mounted on a beam (13) equipped with a lateral displacement module comprising an actuator (131) configured to adjust the lateral position of the weeding module (12) relative to the weeding direction.

8. The weeding device according to any preceding claim, wherein the tools (121, 122, 151) are mounted on pivoting arms (141, 142) interconnected and associated with a spring (149) configured to pivot the arms away from each other when a tool attached to one of the arms (141, 142) encounters an obstacle.

9. A method for removing weeds using the weeding device according to claim 1, the method comprising:
- positioning the weeding modules (12) such that the tools (121, 122, 151) are inserted into the soil symmetrically relative to a course line of a crop row (3), with one tool on each side of the line;
- detecting that the tools (121, 122, 151) approach the plant (31);
- initiating a rotation of at least one of the tools (121, 122) around its axis such that during a rotational translatory motion of the tool (121, 122) relative to the plant (31), the plant (31) is located in the notch (121N) between the arms (121R) of the tool (121, 122) in a plant-bypassing configuration and next, moving the tools (121, 122) to the weed-removing configuration.

10. The method according to claim 9, further comprising performing at least one transition of at least one tool (121, 122) from the weed-removing configuration to the plant-bypassing configuration before the tools (121, 122, 151) approach the plant (31).

## Patentansprüche

1. Unkrautbekämpfungsvorrichtung (1) zur Verwendung mit einem landwirtschaftlichen Traktor, der entlang Reihen von Erntegut zu führen ist, wobei die Unkrautbekämpfungsvorrichtung (1) Folgendes umfasst:
- einen Hauptkörper (11), der zur Anbringung an dem Traktor konfiguriert ist;
- zumindest ein Unkrautbekämpfungsmodul (12) mit Unkrautbekämpfungswerkzeugen, das mit dem Hauptkörper (11) verbunden ist und mittels einer Steuerung (110) basierend auf Bilddaten von einer Kamera (114) gesteuert wird;
**dadurch gekennzeichnet, dass**
- das Unkrautbekämpfungsmodul (12) zwei Werkzeuge umfasst, von denen das erste ein Messer (121) ist, das an einem
Drehdorn (123) montiert ist und Arme (121R) mit Kerben (121N) dazwischen aufweist;
- wobei die Steuerung (110) dazu konfiguriert ist, die Konfiguration des Messers (121) zwischen einer Unkrautentfernungskonfiguration und einer Pflanzenumgehungskonfiguration einzustellen; und
- wobei in der Pflanzenumgehungskonfiguration ein Abstand (DB) zwischen dem Arm (121R) des Messers (121), der einem zweiten Werkzeug (122, 151) am nächsten ist, und dem zweiten Werkzeug (122, 151) größer als ein entsprechender Abstand (DR) in der Unkrautentfernungskonfiguration ist.

2. Unkrautbekämpfungsvorrichtung nach Anspruch 1, wobei das zweite Werkzeug des Unkrautbekämpfungsmoduls (12) ein Messer (122) ist, das an einem zweiten Drehdorn (124) montiert ist.

3. Unkrautbekämpfungsvorrichtung nach Anspruch 1, wobei das zweite Werkzeug des Unkrautbekämpfungsmoduls (12) ein passives Messer (151) ist, das an einem stationären Halter (152) montiert ist.

4. Unkrautbekämpfungsvorrichtung nach einem vorhergehenden Anspruch, wobei das Messer (121, 122), das an dem Drehdorn (123, 124) montiert ist, eine flache Scheibe mit zumindest zwei Armen (121R) ist, deren Enden sich auf dem Umfang eines Kreises befinden, der den Außendurchmesser der Scheibe definiert, und wobei gewölbte Kerben (121N) zwischen den Armen (121R) vorhanden sind.

5. Unkrautbekämpfungsvorrichtung nach einem vorhergehenden Anspruch, wobei die Steuerung (110) ein Pflanzenerkennungsmodul (111) umfasst, das als ein Modul künstlicher Intelligenz implementiert ist, das dazu konfiguriert ist, Bereiche, die durch Erntegut (31) belegt sind, in den Bilddaten von der Kamera (114) zu erkennen.

6. Unkrautbekämpfungsvorrichtung nach einem vorhergehenden Anspruch, ferner umfassend eine Markierung (114M), die innerhalb des Sichtfeldes der Kamera (114) in einem bekannten Abstand von der Kamera (114) zur Bilddatenskalierung positioniert ist.

7. Unkrautbekämpfungsvorrichtung nach einem vorhergehenden Anspruch, wobei zumindest ein Unkrautbekämpfungsmodul (12) an einem Balken (13) montiert ist, der mit einem lateralen Verschiebungsmodul ausgestattet ist, das einen Aktor (131) umfasst, der dazu konfiguriert ist, die laterale Position des Unkrautbekämpfungsmoduls (12) relativ zu der Unkrautbekämpfungsrichtung einzustellen.

8. Unkrautbekämpfungsvorrichtung nach einem vorhergehenden Anspruch, wobei die Werkzeuge (121, 122, 151) an Schwenkarmen (141, 142) montiert sind, die miteinander verbunden und mit einer Feder (149) assoziiert sind, die dazu konfiguriert ist, die Arme voneinander weg zu schwenken, wenn ein Werkzeug, das an einem der Arme (141, 142) angebracht ist, auf ein Hindernis trifft.

9. Verfahren zum Entfernen von Unkraut unter Verwendung der Unkrautbekämpfungsvorrichtung nach Anspruch 1, wobei das Verfahren Folgendes umfasst:
- Positionieren der Unkrautbekämpfungsmodule (12), sodass die Werkzeuge (121, 122, 151) symmetrisch relativ zu einer Verlaufslinie einer Erntegutreihe (3) mit einem Werkzeug auf jeder Seite der Linie in den Boden eingeführt werden;
- Detektieren, dass sich die Werkzeuge (121, 122, 151) der Pflanze (31) nähern;
- Initiieren einer Drehung von zumindest einem der Werkzeuge (121, 122) um seine Achse, sodass sich während einer Drehtranslationsbewegung des Werkzeugs (121, 122) relativ zu der Pflanze (31) die Pflanze (31) in der Kerbe (121N) zwischen den Armen (121R) des Werkzeugs (121, 122) in einer Pflanzenumgehungskonfiguration befindet, und als nächstes Bewegen der Werkzeuge (121, 122) zu der Unkrautentfernungskonfiguration.

10. Verfahren nach Anspruch 9, ferner umfassend Durchführen von zumindest einem Übergang von zumindest einem Werkzeug (121, 122) von der Unkrautentfernungskonfiguration zu der Pflanzenumgehungskonfiguration, bevor sich die Werkzeuge (121, 122, 151) der Pflanze (31) nähern.

## Revendications

1. Dispositif de désherbage (1) destiné à être utilisé avec un tracteur agricole pour être guidé le long de rangs de cultures, le dispositif de désherbage (1) comprenant :
- un corps principal (11) configuré pour être fixé au tracteur ;
- au moins un module de désherbage (12) avec des outils de désherbage, raccordé au corps principal (11) et commandé au moyen d'un dispositif de commande (110) sur la base de données d'image provenant d'une caméra (114) ;
**caractérisé en ce que**
- le module de désherbage (12) comprend deux outils, dont le premier est un couteau (121) monté sur un mandrin rotatif (123) et ayant des bras (121R) avec des encoches (121N) entre eux ;
- dans lequel le dispositif de commande (110) est configuré pour ajuster la configuration du couteau (121) entre une configuration d'élimination de mauvaises herbes et une configuration de contournement de plante ; et
- dans lequel, dans la configuration de contournement de plante, une distance (DB) entre le bras (121R) du couteau (121) qui est le plus proche d'un deuxième outil (122, 151) et ledit deuxième outil (122, 151) est supérieure à une distance correspondante (DR) dans la configuration d'élimination de mauvaises herbes.

2. Dispositif de désherbage selon la revendication 1, dans lequel le deuxième outil du module de désherbage (12) est un couteau (122) monté sur un second mandrin rotatif (124).

3. Dispositif de désherbage selon la revendication 1, dans lequel le deuxième outil du module de désherbage (12) est un couteau passif (151) monté sur un support fixe (152).

4. Dispositif de désherbage selon l'une quelconque des revendications précédentes, dans lequel le couteau (121, 122) qui est monté sur le mandrin rotatif (123, 124) est un disque plat avec au moins deux bras (121R), dont les extrémités sont situées sur la circonférence d'un cercle définissant le diamètre extérieur du disque, et dans lequel des encoches arquées (121N) sont présentes entre les bras (121R).

5. Dispositif de désherbage selon l'une quelconque des revendications précédentes, dans lequel le dispositif de commande (110) comprend un module de reconnaissance de plante (111) mis en œuvre en tant que module d'intelligence artificielle configuré pour reconnaître les zones occupées par les cultures (31) dans les données d'image provenant de la caméra (114).

6. Dispositif de désherbage selon l'une quelconque des revendications précédentes, comprenant en outre un marqueur (114M) positionné dans le champ de vision de la caméra (114) à une distance connue de la caméra (114) pour la mise à l'échelle des données d'image.

7. Dispositif de désherbage selon l'une quelconque des revendications précédentes, dans lequel au moins un module de désherbage (12) est monté sur une poutre (13) équipée d'un module de déplacement latéral comprenant un actionneur (131) configuré pour ajuster la position latérale du module de désherbage (12) par rapport à la direction de désherbage.

8. Dispositif de désherbage selon l'une quelconque des revendications précédentes, dans lequel les outils (121, 122, 151) sont montés sur des bras pivotants (141, 142) interconnectés et associés à un ressort (149) configuré pour faire pivoter les bras en éloignement les uns des autres lorsqu'un outil fixé à l'un des bras (141, 142) rencontre un obstacle.

9. Procédé permettant l'élimination des mauvaises herbes à l'aide du dispositif de désherbage selon la revendication 1, le procédé comprenant :
- le positionnement des modules de désherbage (12) de sorte que les outils (121, 122, 151) soient insérés dans le sol symétriquement par rapport à une ligne de parcours d'un rang de cultures (3), avec un outil de chaque côté de la ligne ;
- la détection que les outils (121, 122, 151) se rapprochent de la plante (31) ;
- l'initiation d'une rotation d'au moins l'un des outils (121, 122) autour de son axe de sorte que lors d'un mouvement de translation rotatif de l'outil (121, 122) par rapport à la plante (31), la plante (31) se situe dans l'encoche (121N) entre les bras (121R) de l'outil (121, 122) dans une configuration de contournement de plante et ensuite, le déplacement des outils (121, 122) vers la configuration d'élimination des mauvaises herbes.

10. Procédé selon la revendication 9, comprenant en outre la réalisation d'au moins une transition d'au moins un outil (121, 122) de la configuration d'élimination des mauvaises herbes à la configuration de contournement de plante avant que les outils (121, 122, 151) ne se rapprochent de la plante (31).
